# EUROPEAN PATENT APPLICATION

(11) **EP 2 124 227 A1**
(43) Date of publication of application: **25.11.2009**
(21) Application number: 09005428.9
(22) Date of filing: 16.04.2009
(51) Int. Cl.: G11B 27/10, G11B 27/11, G06F 17/30

(54) **Playback device**

(30) Priority: 13.05.2008 JP 2008125762
(71) Applicant: Funai Electric Co., Ltd., Osaka 574-0013 (JP)
(72) Inventor: Okazaki, Masaki, Daito-shi Osaka 574-0013 (JP)
(74) Representative: Grünecker, Kinkeldey, Stockmair & Schwanhäusser Anwaltssozietät

(57) **Abstract**

A playback device includes a communication component, an operation component and a playback control component. The communication component is configured to communicate with a network device via a network. The operation component is configured to select a random playback of a plurality of content items that is stored in the network device. The playback control component is configured to control the random playback of the content items. The playback control component acquires only numerical information of the content items from the network device when the operation component selects the random playback of the content items with the numerical information indicating number of the content items. The playback control component randomly determines one of the content items based on the numerical information. The playback control component acquires the one of the content items from the network device to play the one of the content items.

## Description

### CROSS-REFERENCE TO RELATED APPLICATIONS

This application claims priority to Japanese Patent Application No. 2008-125762 filed on May 13, 2008. The entire disclosure of Japanese Patent Application No. 2008-125762 is hereby incorporated herein by reference.

### BACKGROUND OF THE INVENTION

### Field of the Invention

The present invention generally relates to a playback device. More specifically, the present invention relates to a playback device communicating with a network device via a network.

### Background Information

A conventional content distribution system includes a network player and a network server. The network player reproduces video, audio, and other such content data (hereinafter referred to as content). The network server is connected to the network player via a network. The network player and the network server correspond to a DLNA (Digital Living Network Alliance). The network server has a hard disk and a control-use microprocessor. The content is recorded to the hard disk. The control-use microprocessor includes a CPU that performs control processing for controlling the various components of the network server. When a content acquisition request (e.g., an HTTP (HyperText Transfer Protocol) request message such as an HTTP GET) is sent from the network player, the content corresponding to the content acquisition request is sent from the network server to the network player. Then, the network player receives and plays the content.

The network player serves as a control point specified by UPnP (Universal Plug and Play) and executes a search action. The common language of the UPnP is HTTP, and the information that is exchanged is expressed in XML (Extensible Markup Language). With the UPnP, the control point indicates a device that controls the network server. The search action is used to acquire content information from the network server. When the control point sends a content number or the like to the network server, the content number and the content information related to the individual pieces of content returns from the network server.

The network player has a function for a random playback of the content stored in the network server. For instance, by pressing a random playback button provided to a remote control device (hereinafter referred to as remote control), the content stored in the network server is played in random order.

When the network player invokes the search action for the random playback, the network player requests the content information for the same number of pieces of the content as the number of pieces of the content stored in the network server. After all of the content information has been acquired, the content to be played is randomly selected based on the content information and played. The content information includes, for example, the content title, artist name, duration, resolution, bit rate, and so forth. There are no particular restrictions on the content information. Thus, what kind of information is included as content information will vary with the network server to which the content is stored.

During the random playback, the network player requests the content information for all of the content stored in the network server. Thus, a large quantity of the content information ends up being sent from the network server. This will be described by giving a specific example. If, for instance, 80 pieces of audio content have been stored to the network server, the amount of the content information for the 80 pieces of the audio content that are sent from the network server in a single search action is approximately 122 KB.

Accordingly, the transmission of the content information takes some time, and also increases the processing load of the network player.

In view of this, conventional techniques have been proposed for reducing the processing load on the network player during the random playback with the network player (see Japanese Laid-Open Patent Application Publication Nos. 2004-295569 and 2003-111048, for example).

Specifically, with a conventional network server, a list in which the order of content playback is set randomly is produced on the network server based on a request from a client, and is sent to the client (see Japanese Laid-Open Patent Application Publication No. 2004-295569, for example). In particular, the network server stores random order information corresponding to setting information of the order in content playback list in property information of content that the network server stores. The network server shuffles the random order information for the content stored in a designated folder according to a browse request from the network player. The network server produces the content playback list in which is set a list order corresponding to the shuffled random order information. Then, the network server sends the content playback list to the client.

With another network server, a table is sent to a terminal. The table includes randomly accessible data locations in content and the data quantity per piece of individually coded content (see Japanese Laid-Open Patent Application No. 2003-111048, for example) The terminal refers to the table, sends a data location and a specific data quantity to the network server. Then, the terminal receives and plays data of content corresponding to the data location and the data quantity.

With the conventional network servers, the content playback list and the table need to be produced on the network server, and sent to the client and the terminal, respectively. Accordingly, when the client or the terminal is connected via a network to a network server that has no function for producing such a content playback list or table, all of the content information for all of the content stored in the network server is sent from the network server to the client or the terminal during the random playback.

In view of the above, it will be apparent to those skilled in the art from this disclosure that there exists a need for a playback device. This invention addresses this need in the art as well as other needs, which will become apparent to those skilled in the art from this disclosure.

### SUMMARY OF THE INVENTION

The present invention was conceived in light of the above mentioned problems. One object of the present invention is to provide a playback device with which the amount of information sent from a network device during random playback is reduced.

In accordance with one aspect of the present invention, a playback device includes a communication component, an operation component and a playback control component. The communication component is configured to communicate with a network device via a network. The operation component is configured to select a random playback of a plurality of content items that is stored in the network device. The playback control component is configured to control the random playback of the content items. The playback control component acquires only numerical information of the content items from the network device when the operation component selects the random playback of the content items with the numerical information indicating number of the content items. The playback control component randomly determines one of the content items based on the numerical information. The playback control component acquires the one of the content items from the network device to play the one of the content items.

With the playback device, it is possible to provide a playback device with which the amount of information sent from a network device during random playback is reduced.

These and other objects, features, aspects and advantages of the present invention will become apparent to those skilled in the art from the following detailed descriptions, which, taken in conjunction with the annexed drawings, disclose a preferred embodiment of the present invention.

### BRIEF DESCRIPTION OF THE DRAWINGS

Referring now to the attached drawings which form a part of this original disclosure:

FIG. 1 is a block diagram of a content distribution system including a network player and a network server;

FIG. 2 is a block diagram of the network player illustrated in FIG. 1;

FIG. 3 is a block diagram of the network server illustrated in FIG. 1; and

FIG. 4 is a flowchart illustrating a random playback processing of the network player illustrated in FIG. 1.

### DETAILED DESCRIPTION OF THE PREFERRED EMBODIMENT

A preferred embodiment of the present invention will now be explained with reference to the drawings. It will be apparent to those skilled in the art from these disclosures that the following descriptions of the preferred embodiment of the present invention is provided for illustration only and not for the purpose of limiting the invention as defined by the appended claims and their equivalents.

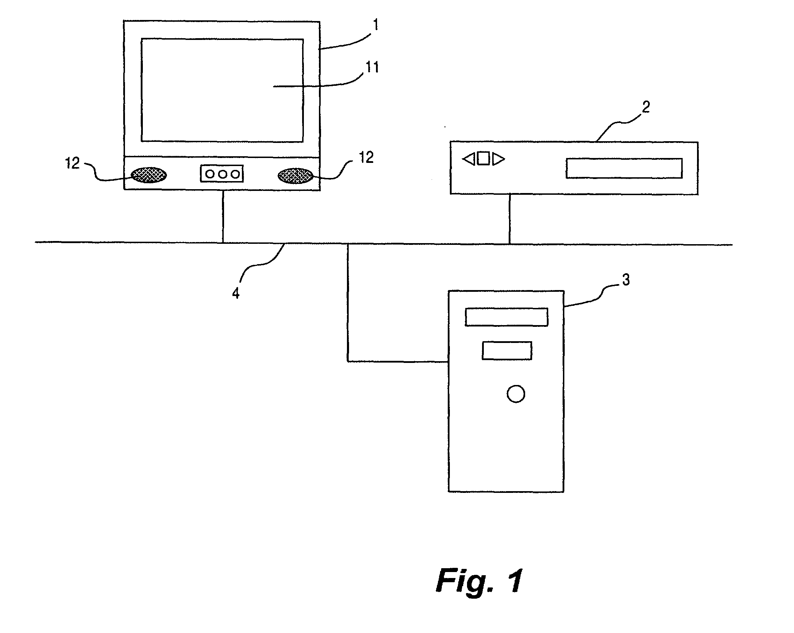

As shown in FIG. 1, a content distribution system includes a network player (e.g., playback device) 1, and a plurality of (two in FIG. 1) network servers (e.g., network device) 2 and 3. The network player 1 renders (or plays) video, audio, or other such content data (hereinafter referred to as content item). The network player 1 also plays the content items randomly (hereinafter referred to as random playback of the content items). The network servers 2 and 3 are connected to the network player 1 via a network 4, such as a wired or wireless LAN (Local Area Network), WAN (Wide Area Network), the Internet and the like. The network player 1 and the network servers 2 and 3 are DLNA (Digital Living Network Alliance) compliant devices, and are easily added to or removed from the network 4. Also, the network player 1 and the network servers 2 and 3 are compliant with UPnP (Universal Plug and Play). The network player 1 serves as a control point, and invokes a search action specified by the UPnP. The network servers 2 and 3 execute a content search function.

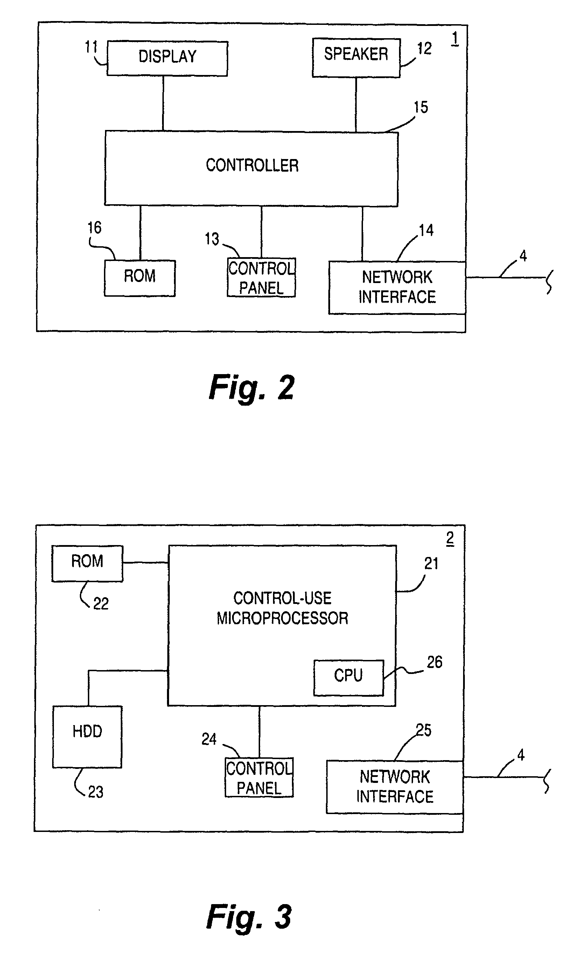

FIG. 2 is a block diagram of the network player 1. The network player 1 includes a display 11, a speaker 12, a control panel (e.g., operation component) 13, a network interface (e.g., communication component) 14, a controller (e.g., playback control component) 15, a ROM (Read Only Memory) 16 and a memory component 17. The network interface 14 sends a content acquisition request (e.g., an HTTP (HyperText Transfer Protocol) request message such as an HTTP GET) to the network servers 2 and 3 and receives the content item corresponding to the content acquisition request from the network servers 2 and 3. The control panel 13 includes a remote control or the like with buttons for the user to operate. The controller 15 controls playback of the received content item and the various components of the network player 1. The ROM 16 stores operating programs of the controller 15. The display 11 outputs the content items, such as the videos or images received through the network interface 14. The speaker 12 outputs audio based on an audio signal outputted from the controller 15. The memory component 17 includes a rewritable nonvolatile memory, such as a flash memory or an EEPROM (Electrically Erasable Programmable Read Only Memory). Furthermore, the memory component 17 can include other types of storage device, such as a semiconductor memory and a hard disk drive.

FIG. 3 is a block diagram of the network server 2. The network server 3 has the same configuration as the network server 2, and the processing performed by the network server 2 can also be performed by the network server 3.

The network server 2 includes a control-use microprocessor 21, a ROM 22, a hard disk drive (HDD) 23, a control panel 24 and a network interface 25. The hard disk drive 23 stores a plurality of the content items. The control panel 24 includes a remote control or the like that is operated by the user. The network interface 25 receives the content acquisition request sent from the network player 1 and sends the content item corresponding to the content acquisition request. The control-use microprocessor 21 has a CPU (Central Processing Unit) 26. The CPU 26 performs control processing for controlling the various components of the network server 2. The ROM 22 stores the operating programs of the control-use microprocessor 21.

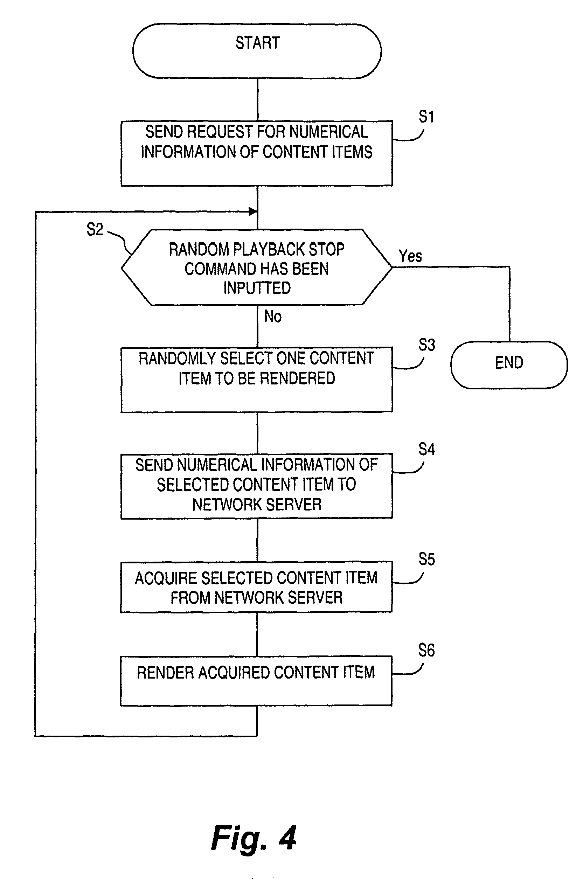

FIG. 4 is a flowchart illustrating the random playback processing of the network player 1.

When the user presses a random playback button (not shown) on the control panel 13, the controller 15 receives signal indicating that the random playback button is pressed, and commences the random playback processing.

Specifically, when the random playback processing is commenced, the controller 15 invokes a search action (step S1). Specifically, by the search action, the controller 15 sends a request for numerical information of the content items stored in the network server 2 (step S1). The numerical information indicates the number of the content items stored in the network server 2. At this point the controller 15 simultaneously begins monitoring whether or not a random playback stop command has been inputted by user operation of the random playback stop button (not shown) on the control panel 13 (step S2).

The network server 2 sends the network player 1 only the numerical information of the content items stored in the hard disk drive 23 of the network server in response to the request from the controller 15. That is, the network server 2 does not send content information such as content titles, artist names, durations, resolutions, bit rates for the content items stored in the network server 2. If, for instance, 80 pieces of audio content have been stored in the network server 2, then the amount of the content information for the audio content that is sent in response to a single search action with the conventional processing is approximately 122 KB. However, with the network player 1, since only the numerical information is requested, the amount of the information that is sent from the network server 2 is reduced to approximately 12 KB. The amount of information will vary with the specifications of the network server 2, but in any case the more content items the network server 2 stores, the greater is the difference in the amount of information being sent. That is, the reduction that is attained becomes more pronounced.

When the controller 15 acquires the numerical information of the content items from the network server 2, the controller 15 randomly selects one content item to be rendered out of the content items based on the numerical information (step S3). For example, if the value of the numerical information of the content items is 80, then any one number between 1 and 80 is selected at random (such as "15"). The information for the selected content item, that is, the numerical value of the random number "15", is sent to the network server 2 by HTTP GET to identify the selected content item by index format (step S4).

The network server 2 takes the 15th content item from among 80 content items stored in the hard disk drive 23 based on the numerical value "15" received from the network player 1, and transfers the 15th content item to the network player 1.

When the network player 1 acquires the 15th content item transferred from the network server 2 (step S5), the controller 15 renders (or plays) the acquired content item (step S6), and continues the random playback processing. Specifically, when the network player 1 acquires the 15th content item from the network server 2, the network player 1 can acquire the content information of the 15th content item with the 15th content item.

After this, the processing returns to step S 1. Then, the controller 15 determines whether or not the random playback stop command has been inputted by the user operation of the random playback stop button on the control panel 13. If the random playback stop command has not been inputted ("No" in step S2), the processing from step S3 to step S6 is continued. Specifically, when the controller 15 finishes to render the content item acquired in step S5 on the last loop, a random number is generated based on the numerical information acquired in response to step S1. Specifically, the random number within the value of the numerical information is generated to determine the next content item to be played (step S3). Furthermore, the controller 15 sends the numerical value of the random number thus determined to the network server 2 by HTTP GET to identify the content item by index format (step S4). Then, the controller 15 acquires the next content item from the network server 2 (step S5), and the acquired content item is rendered (step S6), thereby continuing the random playback of the content items stored in the network server 2.

The controller 15 repeats the processing from step S3 to step S6, every time the playback of the content item currently being rendered is finished, until the random playback stop command is inputted ("Yes" in step S2).

The content information of the content items includes a great deal of information that is not necessary for the random playback, such as the content titles, the artist names, the durations, resolutions, bit rates, and so forth. However, with the network player 1, not all of the content information is acquired. Specifically, during the random playback, the network player 1 acquires only the numerical information of the content items indicating how many content items are stored in the network server 2. Thus, the amount of the information sent from the network server 2 can be reduced. This takes up less network bandwidth, so normalization of communication of the network 4 can also be achieved. Furthermore, the processing load for processing the information sent from the network server can be lightened. As a result, the operating performance of the network player 1 can also be enhanced.

With the content distribution system, the network player 1 acquires only the numerical information from the network server 2 in response to the search action. However, the network player 1 can acquire the numerical information with the content information of any one of the content items from the network server 2 in response to the search action. In this case, since the network player 1 does not acquire the content information of all of the content items stored in the network server 2, the amount of the information sent from the network server 2 during the random playback can still be reduced.

With the content distribution system, the network player 1 can randomly play the content items stored in the network servers 2 and 3. Specifically, when the network player 1 invokes the search action, the controller 15 sends the requests for the numerical information to the network servers 2 and 3, respectively. When the network player 1 acquires the numerical information from the network servers 2 and 3, respectively, the network player 1 adds the values of the numerical information from the network servers 2 and 3. Then, the network player 1 generate a random number within the total of the values of the numerical information to select one content item out of content items stored in the network servers 2 and 3. For instance, when the network servers 2 and 3 store 80 content items and 50 content items, respectively, the network player 1 generate the random number between 1 and 130. When the numerical value of the random number is between 1 and 80 (such as "15"), then the network player 1 sends the numerical value of the random number "15" to the network server 2 by HTTP GET to identify the 15th content item by the index format. On the other hand, when the numerical value of the random number is between 81 and 130 (such as "100"), the network player 1 calculates an index value by subtracting the value "80" from the numerical value of the random number "100", and sends the index value "20" to the network server 3 by HTTP GET to identify the 20th content item of the network server 3 by the index format. As a result, the network player 1 acquires the randomly selected content item from the network servers 2 and 3.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, and/or steps, but do not exclude the presence of other unstated features, elements, components, groups, and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only a preferred embodiment has been chosen to illustrate the present invention, it will be apparent to those skilled in the art from this disclosure that various changes and modifications can be made herein without departing from the scope of the invention as defined in the appended claims. Furthermore, the foregoing descriptions of the preferred embodiment according to the present invention are provided for illustration only, and not for the purpose of limiting the invention as defined by the appended claims and their equivalents.

## Claims

1. A playback device comprising:
a communication component configured to communicate with a network device via a network;
an operation component configured to select a random playback of a plurality of content items that is stored in the network device; and
a playback control component configured to control the random playback of the content items, the playback control component acquiring only numerical information of the content items from the network device when the operation component selects the random playback of the content items with the numerical information indicating number of the content items, the playback control component randomly determining one of the content items based on the numerical information, and the playback control component acquiring the one of the content items from the network device to play the one of the content items.

2. The playback device according to claim 1, wherein
the playback control component randomly determines the one of the content items by generating a random number within the number of the content items that is indicated by the numerical information.

3. The playback device according to claim 2, wherein
the communication component is configured to communicate with the network device via the network using UPnP (Universal Plug and Play).

4. The playback device according to claim 3, wherein
the playback control component invokes a search action specified by the UPnP to send a request for the numerical information to the network device when the operation component selects the random playback of the content items, and invokes the search action to identify the one of the content items and to acquire the one of the content items from the network device.

5. A playback method of a playback device, comprising:
selecting a random playback of a plurality of content items that is stored in a network device, the network device communicating with the playback device via a network;
acquiring only numerical information of the content items from the network device upon selecting the random playback of the content items with the numerical information indicating number of the content items;
randomly determining one of the content items based on the numerical information; and
acquiring the one of the content items from the network device to play the one of the content items.

6. The playback method according to claim 5, wherein
the randomly determining of the one of the content items further includes randomly determining the one of the content items by generating a random number within the number of the content items that is indicated by the numerical information.

7. The playback method according to claim 6, wherein
the network device communicates with the playback device via the network using UPnP (Universal Plug and Play).

8. The playback method according to claim 7, further comprising
invoking a search action specified by the UPnP to send a request for the numerical information to the network device upon selecting the random playback of the content items, and
invoking the search action to identify the one of the content items and to acquire the one of the content items from the network device.
